# EUROPEAN PATENT SPECIFICATION

(11) **EP 2 886 977 B1**
(45) Date of publication and mention of the grant of the patent: **18.09.2019**
(21) Application number: 14197982.3
(22) Date of filing: 15.12.2014
(51) Int. Cl.: F25B 45/00, F24F 11/30, F24F 110/10, F25B 13/00, F25B 43/02, F25B 31/00, F25B 40/02, F25B 41/00

(54) **METHOD OF CONTROLLING AN AIR CONDITIONER**
VERFAHREN ZUR STEUERUNG EINER KLIMAANLAGE
PROCÉDÉ DE COMMANDE D'UN CLIMATISEUR

(30) Priority: 17.12.2013 KR 20130157619
(43) Date of publication of application: 24.06.2015
(73) Proprietor: LG Electronics Inc., Yeongdeungpo-gu Seoul, 150-721 (KR)
(72) Inventor: Lim, Hongjae, 153-802 Seoul (KR); Lee, Jaewan, 153-802 Seoul (KR)
(74) Representative: Vossius & Partner Patentanwälte Rechtsanwälte mbB

(56) References cited:
- EP-A2- 2 587 177
- US-A1- 2012 266 622

## Description

### BACKGROUND

The present invention relates to a method of controlling an air conditioner.

Air conditioners are appliances that maintain air within a predetermined space to the most proper state according to use and purpose thereof. In general, such an air conditioner includes a compressor, a condenser, an expansion device, and evaporator. Thus, the air conditioner has a refrigerant cycle in which compression, condensation, expansion, and evaporation processes of a refrigerant are performed. Thus, the air conditioner may heat or cool a predetermined space.

The predetermined space may be variously provided according to a place at which the air conditioner is used. For example, when the air conditioner is disposed in a home or office, the predetermined space may be an indoor space of a house or building. On the other hand, when the air conditioner is disposed in a vehicle, the predetermined space may be a boarding space in which a person is boarded.

When the air conditioner performs a cooling operation, an outdoor heat-exchanger provided in an outdoor unit may serve as a condenser, and an indoor heat-exchanger provided in an indoor unit may serve as an evaporator. On the other hand, when the air conditioner performs a heating operation, the indoor heat-exchanger may serve as the condenser, and the outdoor heat-exchanger may serve as the evaporator.

In general, an air conditioner includes a compressor, a gas/liquid separator for separating a gaseous refrigerant to introduce the separated gaseous refrigerant into the compressor, a flow switching part for switching a flow direction of the high-pressure refrigerant discharged from the compressor, and outdoor and indoor heat-exchangers.

When the air conditioner performs a cooling operation, the refrigerant compressed in the compressor is introduced into the outdoor heat-exchanger via the flow switching part. Then, the refrigerant condensed in the outdoor heat-exchanger is decompressed in an expansion device and is evaporated in the indoor heat-exchanger.

When the air conditioner performs a heating operation, the refrigerant compressed in the compressor is introduced into the indoor heat-exchanger via the flow switching part. Then, the refrigerant condensed in the indoor heat-exchanger is decompressed in an expansion device and is evaporated in the outdoor heat-exchanger.

When the air conditioner performs the cooling or heating operation, the refrigerant compressed in the compressor may generally have a pressure (high pressure) within a predetermined range. However, the high pressure may rise to an abnormal range during the operation. For example, if external air changes in temperature, or an amount of refrigerant circulating into the cycle is not suitable, the high pressure may rise.

Also, in case of the heating operation, a time taken to allow the refrigerant discharged from the compressor to circulate according to a length of a tube may increase when a system initially operates. Thus, a pressure of a compressor suction part may be significantly lowered. Also, due to the above-described limitations, an oil forming phenomenon may occur within the compressor, or the compressor may operate out of an operable range thereof to deteriorate reliability.

To solve the above-described limitations, if the high pressure rises, the compressor according to the related art operates at the lowest frequency.

In detail, the air conditioner according to the related art performs the cooling or heating operation, a target high-pressure or target low-pressure of the compressor is initially set, and an operation high-pressure or low-pressure of the operating compressor is detected.

Also, the detected operation high-pressure or operation low-pressure and the set target high-pressure or target low-pressure are compared to each other to determine an operation state of the compressor. That is, it is determined whether the operation high-pressure detected by the high-pressure sensor is above the target high-pressure and whether the operation low-pressure detected by the low-pressure sensor is below the target low-pressure.

If it is determined that the detected operation high-pressure is below the target high-pressure, or the operation low-pressure is above the target low-pressure, the target high-pressure and the target low-pressure are changed and reset. That is, when a difference between the operation high-pressure and the operation low-pressure is less than that between the target high-pressure and the target low-pressure, the target pressure may be reset so that an operation pressure corresponding to an indoor load is generated.

On the other hand, when it is determined that the detected operation high-pressure is above the target high-pressure, or the operation low-pressure is below the target low-pressure, the compressor is variably controlled to allow the operation low-pressure to reach the target low-pressure.

That is, according to the related art, the operation high-pressure or low-pressure of the air conditioner may be detected, and the detected operation high-pressure or operation low-pressure may be compared to the initially set target high-pressure or target low-pressure to change a target value so that a difference between the high-pressure and the low-pressure belongs to a predetermined range to prevent the difference between the operation pressure and the target pressure from excessively occurring, thereby allowing a protection operation for the compressor to be performed.

As a result, the operation of the compressor may be controllable on the basis of the operation frequency in the related art. Particularly, the compressor may operate at the lowest frequency during the low load operation to control an operation factor.

However, when the compressor operates at the lowest frequency, the lowest amount of refrigerant that is previously set in the system has to be maintained. Thus, the lowest frequency operation performance of the compressor may be high, and thus, the operation efficiency may be deteriorated. That is, according to the related art, there is a limitation that it is difficult to more efficiently control the operation of the air conditioner under the low load condition.

EP 2 587 177 A2 describes an air conditioner including an indoor unit and an outdoor unit, the outdoor unit including a compressor, an outdoor heat exchanger, a supercooling unit for supercooling a refrigerant, a first refrigerant pipe allowing the supercooling unit to communicate with a suctions side of the compressor, a first valve disposed in the first refrigerant pipe, a second refrigerant pipe connecting the compressor to the first refrigerant pipe and a second valve disposed in the second refrigerant pipe. EP 2 587 177 A2 discloses a method according to the preamble of claim 1.

### SUMMARY

Embodiments provide a method of controlling an air conditioner that is capable of controlling an operation factor of a compressor even though an operation pressure exceeds a target pressure (high/low pressure) when the compressor operates at the lowest frequency during a low load operation.

A method of controlling an air conditioner as defined by claim 1 includes: determining whether a low-load condition is satisfied on the basis of the number of indoor units or a temperature of external air; performing a low-load operation of a compressor at a preset frequency when the low-load condition is satisfied; detecting whether the operation pressure is out of a target pressure value or range while the low-load operation is performed; and bypassing a refrigerant from the compressor to a gas/liquid separator via an injection passage when the operation pressure is out of the target pressure value or range.

The air conditioner further includes: a bypass passage connected to the gas/liquid separator; and a first branch part from which the injection passage and the bypass passage are branched, wherein the bypassing of the refrigerant may include introducing the refrigerant into the gas/liquid separator by successively passing through the injection passage and the bypass passage.

The air conditioner further includes a bypass valve disposed in the bypass passage to adjust a flow rate of the refrigerant, wherein the bypassing of the refrigerant may further include opening the bypass valve.

The air conditioner further includes an injection valve disposed in the injection passage to adjust a flow rate of the refrigerant, wherein the bypassing of the refrigerant may include adjusting an opening degree of the injection valve.

The air conditioner further includes first and second branch tubes branched from a second branch part of the injection passage, wherein the first branch tube may extend to a first compressor, and the second branch tube may extend to a second compressor.

The air conditioner further includes: a high-pressure sensor detecting a refrigerant discharge pressure of the compressor during the operation pressure; and a low-pressure sensor detecting a refrigerant suction pressure of the compressor during the operation pressure, wherein the adjusting of the opening degree of the injection valve may be performed until the pressure detected by the high-pressure sensor or low-pressure sensor reaches the target pressure value or range.

The target pressure value or range includes a value or range with respect to a preset target high-pressure. When the air conditioner performs a heating operation, the adjusting of the opening degree of the injection valve is performed until the pressure detected by the high-pressure sensor reaches the value or range with respect to the target high-pressure.

The target pressure value or range includes a value or range with respect to a preset target low-pressure. When the air conditioner performs a cooling operation, the adjusting of the opening degree of the injection valve is performed until the pressure detected by the low-pressure sensor reaches the value or range with respect to the target low-pressure.

When the pressure detected by the high-pressure sensor or the low-pressure sensor reaches the target pressure value or range, the bypass valve may be closed.

When the operation pressure is out of the target pressure value or range, a fuzzy-control of the compressor may be stopped, and when the pressure detected by the high-pressure sensor or the low-pressure sensor reaches the target pressure value or range, a fuzzy-control of the compressor may be performed.

An air conditioner not forming part of the invention may include: a compressor compressing a refrigerant; a gas/liquid separator disposed in a suction-side of the compressor to separate a gaseous refrigerant of the refrigerant, thereby supplying the separated gaseous refrigerant into the compressor; a condenser disposed in an outlet-side of the compressor to condense the refrigerant; a supercooler disposed on an outlet-side of the condenser; a first branch part disposed on an outlet-side of the supercooler; a bypass passage in which a bypass valve is disposed, the bypass passage extending from the first branch part to the gas/liquid separator; an injection passage in which an injection valve is disposed, the injection passage extending from the first branch part to the compressor; and a control unit opening the bypass valve and the injection valve to bypass the refrigerant from the compressor to the gas/liquid separator when a discharge pressure of the compressor is higher than a target high-pressure, or a suction pressure of the compressor is lower than a target low-pressure.

The bypass valve may include an on/off-controllable solenoid value, and the injection valve may include an electric expansion value of which an opening degree is adjustable.

The control unit may control the injection valve so that the injection valve is closed when the discharge pressure of the compressor reaches the target high-pressure, or the suction pressure of the compressor reaches the target low-pressure.

The compressor may include a first compressor and a second compressor, and first and second branch tubes respectivley branched to the first and second compressors may be disposed in the injection passage.

The control unit may set an operation frequency of the compressor to a preset minimum frequency when a low-load condition is satisfied on the basis of the number of operating indoor units or a temperature of external air.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating constitutions of an air conditioner according to an example not forming part of the invention.
Fig. 2 is a cycle view illustrating a flow rate adjustment path of an air conditioner.
Fig, 3 is a schematic view illustrating constitutions for controlling a flow rate of an air conditioner according to an embodiment.
Fig. 4 is a flowchart illustrating a method of controlling an air conditioner when the air conditioner operates at a low load according to an embodiment.
Fig. 5 is a graph illustrating operation efficiency when an air conditioner operates at the low load according to an embodiment.

### DETAILED DESCRIPTION OF THE EMBODIMENTS

Hereinafter, exemplary embodiments will be described with reference to the accompanying drawings. The invention may, however, be embodied in many different forms and should not be construed as being limited to the embodiments set forth herein. The invention is defined within the scope of the appended claims.

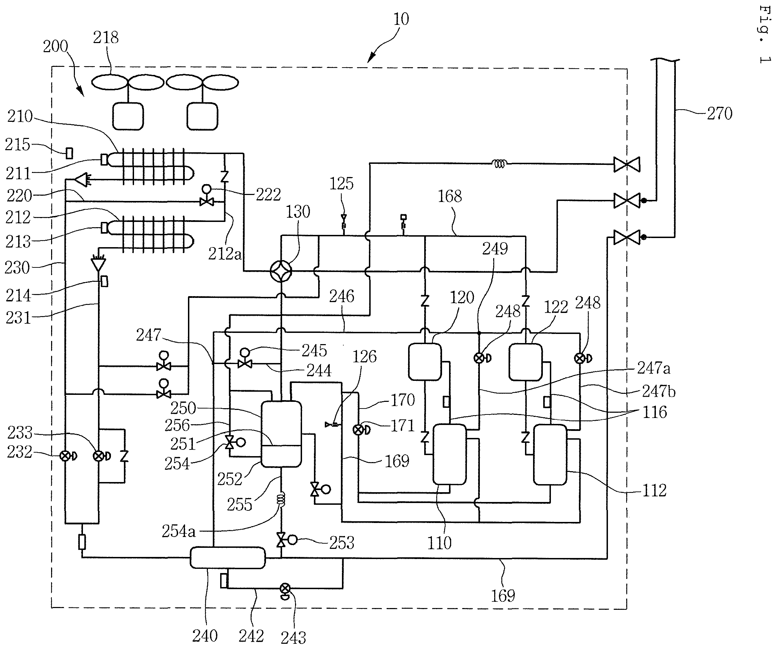

Fig. 1 is a view illustrating constitutions of an air conditioner according to an example not forming part of the invention.

Referring to Fig. 1, an air conditioner includes a plurality of compressors 110 and 112. The plurality of compressors 110 and 112 include a compressor 110 and a second compressor 112, which are connected in parallel to each other.

Oil separators 120 and 122 for separating oil from a discharged refrigerant may be disposed on outlet-sides of the plurality of compressors 110 and 112, respectively. The oil separators 120 and 122 includes a first oil separator 120 disposed on the outlet-side of the first compressor 110 and a second oil separator 122 disposed on the outlet-side of the second compressor 112.

The air conditioner 10 includes a collection passage 116 for collecting the separated oil into the first and second oil separators 120 and 122. The collection passage extends from the first oil separator 120 to the first compressor 110 and from the second oil separator 122 to the second compressor 112 to collect the oil into the first and second compressors 110 and 112.

A high-pressure sensor 125 for detecting a discharge pressure of the refrigerant discharged from the compressors 110 and 112 and a flow switching part 130 for guiding the refrigerant passing through the high-pressure sensor 125 to the outdoor heat-exchanger 200 or the indoor unit are disposed on outlet-sides of the oil separators 120 and 122. For example, the flow switching part 130 may include a four-way valve.

When the air conditioner 10 performs a cooling operation, the refrigerant may be introduced from the flow switching part 130 into the flow switching part 130. On the other hand, when the air conditioner 10 performs a heating operation, the refrigerant may flows from the flow switching part 130 into an indoor heat-exchanger of the indoor unit.

The refrigerant passing through the outdoor heat-exchanger 200 may be introduced into a supercooling heat-exchanger 240. The supercooling heat-exchanger 240 may be understood as an intermediate heat-exchanger in which a first refrigerant circulating into a system and a branched portion (a second refrigerant) of the first refrigerant are heat-exchanged with each other. The first refrigerant may be supercooled while being heat-exchanged in the supercooling heat-exchanger 240, and the second refrigerant may be heated.

The air conditioner 10 includes a supercooling passage 242 in which the second refrigerant is branched. Also, a supercooling expansion device 243 for decompressing the second refrigerant may be disposed in the supercooling passage 242. The supercooling expansion device 243 may include an electronic expansion valve (EEV).

The second refrigerant that is heat-exchanged in the supercooling heat-exchanger 240 may be introduced into the gas/liquid separator 250 or the first and second compressors 110 and 112. The gas/liquid separator 250 may be configured to separate a gaseous refrigerant from the refrigerant before the refrigerant is introduced into the compressors 110 and 112. The separated gaseous refrigerant may be introduced into the first and second compressors 110 and 112 along a main suction passage 169. Also, a low-pressure sensor 126 for detecting a pressure of the suctioned refrigerant may be further provided in the main suction passage 169.

The air conditioner 10 further comprises a uniform oil tube 170 extending from the first and second compressors 110 and 112 to the main suction passage 169 and a uniform oil valve 171 disposed in the uniform oil tube 170. At least one portion of the oil stored in the first or second compressor 110 or 112 flows into the uniform oil tube 170 and then is supplied into the main suction passage 169.

The air conditioner 10 includes a bypass passage 244 that is branched from the supercooling passage 242 to guide the refrigerant into the gas/liquid separator 250 and an injection passage 246 for guiding the refrigerant into the first and second compressors 110 and 112. The air conditioner 10 further includes a first branch part 247 from which the bypass passage 244 and the injection passage 246 are branched.

A bypass valve 245 for control a turn-on/off operation or an opening degree of the bypass passage 244 may be disposed in the bypass passage 244. For example, the bypass valve 245 may include a solenoid valve.

The injection passage 246 includes a first branch tube 247a and a second branch tube 247b. The first and second branch tubes 247a and 247b may be branched from the injection passage 246 to inject the refrigerant into the first and second compressors 110 and 112, respectively. The air conditioner 10 further includes a second branch part 249 from which the first and second branch tubes 247a and 247b are branched.

The air conditioner 10 further includes an injection valve 248 disposed in each of the first and second branch tubes 247a and 247b. The injection valve 248 may include an electric expansion valve (EEV) of which an opening degree is adjustable. An amount of refrigerant injected into each of the first and second compressors 110 and 112 may be adjusted by controlling the opening degree of the injection valve 248.

The air conditioner 10 includes a receiver 252 for storing at least a portion of the first refrigerant passing through the supercooling heat-exchanger 240 and a receiver inlet passage 255 branched from an outlet-side of the supercooling heat-exchanger 240 to the receiver 252 to guide a flow of the first refrigerant. A receive inlet valve 253 for adjusting an amount of refrigerant flowing into the receiver inlet passage 255 and a decompression unit 254a for decompressing the refrigerant may be disposed in the receiver inlet passage 255. For example, the decompression unit 254a may include a capillary tube.

A receiver outlet tube 256 is connected to the receiver 252. The receiver outlet tube 256 may extend from the receiver 252 to the gas/liquid separator 250. At least a portion of the refrigerant stored in the receiver 252 may be introduced into the gas/liquid separator 250 through the receiver outlet tube 256.

A receiver outlet valve 254 for adjusting an amount of refrigerant discharged from the receiver 252 is disposed in the receiver outlet tube 256. An amount of refrigerant injected into the gas/liquid separator 250 may be adjusted by controlling an opening degree of the receiver outlet valve 254.

The receiver 252 may be coupled to the gas/liquid separator 250. In detail, the receiver 252 and the gas/liquid separator 252 may be partitioned by a partition plate 251 within a refrigerant storage tank. For example, the gas/liquid separator 250 may be disposed in an upper portion of the refrigerant storage tank, and the receiver 252 may be disposed in a lower portion of the refrigerant storage tank.

A remaining refrigerant, except for the refrigerant flowing into the receiver inlet tube 255, of the first refrigerant passing through the supercooling heat-exchanger 240 may be introduced into the indoor unit through the connection tube 270. When the air conditioner 10 performs the heating operation, the indoor heat-exchanger disposed in the indoor unit may serve as a "condenser". On the other hand, when the air conditioner 10 performs the cooling operation, the outdoor heat-exchanger 200 may serve as a "condenser".

The outdoor heat-exchanger 200 includes a plurality of heat-exchange parts 210 and 212 and an outdoor fan 218. The plurality of heat-exchange parts 210 and 212 include a first heat-exchange part 210 and a second heat-exchange part 212 which are connected in parallel to each other.

The outdoor heat-exchanger 200 further includes a variable passage 220 for guiding a flow of the refrigerant an outlet-side of the first heat-exchange part 210 to an inlet-side of the second heat-exchange part 212. The variable passage 220 extends from a first outlet tube 230 that is an outlet-side tube of the first heat-exchange part 210 to an inlet tube 212a that is an inlet-side tube of the second heat-exchange part 212.

A first valve 222 disposed in the variable passage 220 to adjust a flow of the refrigerant is disposed in the outdoor heat-exchanger 200. For example, the first valve 222 may include an on/off-controllable valve. The refrigerant passing through the first heat-exchange part 210 may be selectively introduced into the second heat-exchange part 212 according to whether the first valve 222 is turned on or off.

In detail, when the first valve 222 is turned on or opened, the refrigerant passing through the first heat-exchange part 210 flows into the inlet tube 212a via the variable passage 220 and then is heat-exchanged in the second heat-exchange part 212. Also, the refrigerant passing through the second heat-exchange part 212 may be introduced into the supercooling heat-exchanger 240 through a second outlet tube 231.

On the other hand, when the first valve 222 is turned off, the refrigerant passing through the first heat-exchange part 210 may be introduced into the supercooling heat-exchanger 240 through the first outlet tube 230.

A second valve 232 for adjusting a flow of the refrigerant is disposed in the first outlet tube 230, and a third valve 233 for adjusting a flow of the refrigerant is disposed in the second outlet tube 231. The second valve 232 and the third valve 233 may be connected to each other in parallel. Also, the second or third valve 232 or 233 may include an EEV of which an opening degree is adjustable.

When the second valve 232 is opened or increases in opening degree, an amount of refrigerant flowing through the first outlet tube 230 may increase. Also, when the third valve 233 is opened or increases in opening degree, an amount of refrigerant flowing through the second outlet tube 231 may increase. The first outlet tube 230 and the second outlet tube 231 are combined with each other and be connected to the inlet-side tube of the supercooling heat-exchanger 240.

The outdoor heat-exchanger 200 further includes an outdoor temperature sensor 215 for detecting a temperature of external air.

In the current embodiment, if a required load is low, a low-load operation is performed. Also, an operation pressure is less than a preset target pressure even when the low-load operation is performed, an operation factor may be controlled through the bypassing of the refrigerant.

Hereinafter, a method of controlling an operation factor when the air conditioner operates at a low load will be described.

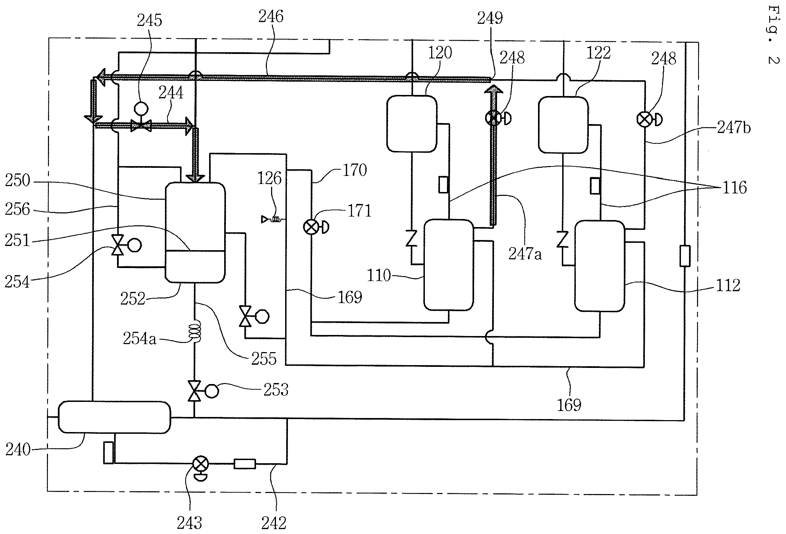

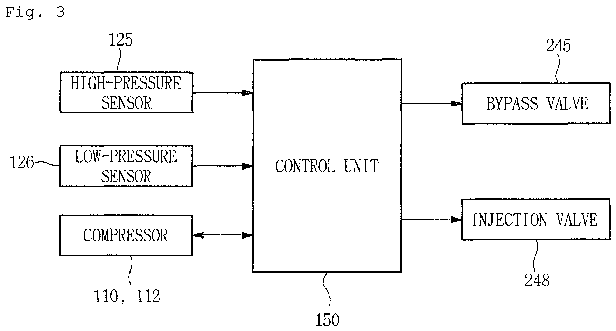

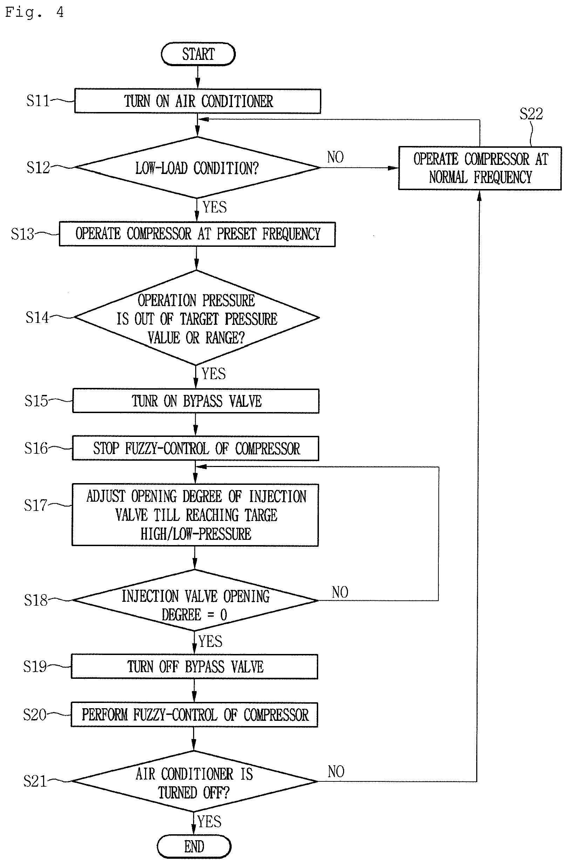

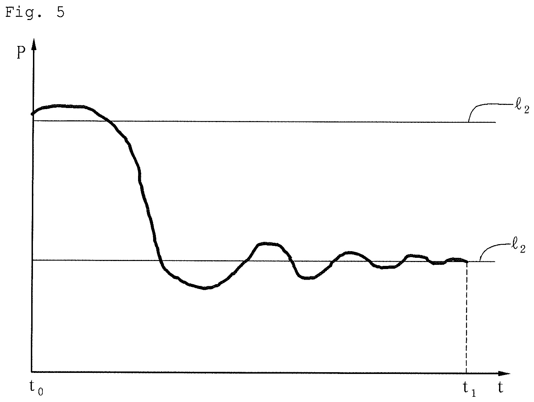

Fig. 2 is a cycle view illustrating a flow rate adjustment path of the air conditioner. Fig. 3 is a schematic view illustrating constitutions for controlling a flow rate of an air conditioner according to an embodiment. Fig. 4 is a flowchart illustrating a method of controlling an air conditioner when the air conditioner operates at a low load according to an embodiment. And Fig. 5 is a graph illustrating operation efficiency when an air conditioner operates at the low load according to an embodiment.

Referring to Figs. 2 to 4, when an air conditioner is turned on, a required load is determined. For example, the required load may be determined on the basis of the number of operating indoors of a plurality of indoor units or a temperature of external air. In operation S11 and S13, the more the number of indoor units (an indoor unit load) decreases, and the temperature of the external air increases when a heating operation is performed, the more the required load may decrease.

If a load required for the indoor units is low, i.e., when a low-load condition is satisfied, a low-load operation process (S13) in which each of first and second compressors 110 and 112 operates a preset low frequency may be performed. In the low-load operation process (S13), each of the first and second compressors 110 and 112 may be fuzzy-controlled to a low frequency to control an operation factor of the compressor according to the low-load state. Also, the preset low frequency may be a "minimum frequency", for example a frequency of about 15 Hz. On the other hand, if the low-load condition is not satisfied, each of the first and second compressors 110 and 112 may operate at a normal frequency in operation S22.

Although each of the first and second compressors 110 and 112 operates at the low frequency through the low-load operation process (S100), if the operation pressure (a high-pressure or low-pressure) exceeds the preset target pressure (a target high-pressure or target low-pressure), the operation high-pressure may increase above the target high-pressure, and the operation low-pressure may decrease below the target low-pressure.

For example, when the indoor load is relatively very low, the temperature of the external air is relatively very high, even though each of the first and second compressors 110 and 112 operates at the preset minimum frequency, it may be determined that operation performance of each of the first and second compressors 110 and 112 is significantly greater than the required load.

Thus, when the operation pressure is out of a target pressure value or range in operation S14, a control unit 150 performs flow rate control processes (S15 to S17) for bypassing a refrigerant from the compressors 110 and 112 to a gas/liquid separator 250.

In detail, a bypass valve 245 is opened, and a fuzzy control of each of the first and second compressors 110 and 112 is stopped. For example, the bypass valve 235 is fully opened to secure a path through which the refrigerant is bypassed from the first and second compressors 110 and 112 to the gas/liquid separator 250 in operations S15 and S16.

Also, an opening degree of the injection valve 248 may be adjusted to adjust an amount of refrigerant flowing into the bypass passage 244 from the first and second compressors 110 and 112 via first and second branch tubes 247a and 247b and an injection passage 246. When the bypass valve 245 and the injection valve 248 are opened, the refrigerant may flow from the first and second branch tubes 247a and 247b in which a relatively high-pressure is generated to the bypass passage 244 in which a relatively low-pressure is generated.

The bypassing of the refrigerant from the injection passage 246 to the bypass passage 244 may be performed by adjusting an opening degree of the injection valve 248 in the state where the bypass valve 245 is opened or may be performed by simultaneously controlling the opening of the bypass valve 245 and the adjustment of the injection valve 248.

As described above, since the refrigerant flows from the first and second compressors 110 and 112 to the gas/liquid separator 250 by successively passing through the first and second branch tubes 247a and 247b, the injection passage 246, and the bypass passage 244, an amount of refrigerant within the first and second compressors 110 and 112 may be reduced to control the operation factor of each of the first and second compressors 110 and 112 and reduce the performance of each of the first and second compressors 110 and 112.

While the operation factor of each of the first and second compressors 110 and 112 is controlled, the operation pressure (the high-pressure and low-pressure) in a cycle may be variable.

The control of the opening degree of the injection valve 248 may be performed until the operation pressure of the cycle reaches a target pressure. That is, the control of the opening degree of the injection valve 248 may be performed until the high-pressure of the operation pressure decreases to reach the target high-pressure, or the low-pressure of the operation pressure increases to reach the target low-pressure.

In detail, the opening degree of the injection valve 248 may be determined whether a first difference valve between the operation high-pressure detected by the high-pressure sensor 125 and the preset target high-pressure or a second difference value between the operation low-pressure detected by the low-pressure sensor 126 and the preset target low-pressure reach a preset range. For example, when the air conditioner 10 performs a heating operation, the control for comparing the first difference valve may be performed. On the other hand, when the air conditioner 10 performs a cooling operation, the control for comparing the second difference value may be performed.

The more the first or second difference valve increases, the more the opening degree of the injection valve 248 may be controlled to increase. When the first or second difference valve reaches the preset range, the injection valve 248 may be closed (where, the opening degree = 0).

In summary, the bypass flow of the refrigerant may be performed while the opening degree of the injection valve 248 is fuzzy-controlled on the basis of the pressure detected by the high-pressure sensor 125 or low-pressure sensor 126. Here, the bypass flow of the refrigerant may be performed until the operation pressure reaches the target pressure in operation S17 and S18.

When the injection valve 248 is closed, i.e., when the opening degree of the injection valve 248 is zero, the bypass valve 245 may be controlled to be closed, and the first and second compressors 110 and 112 may be fuzzy-controlled to the preset frequency. The above-described control may be performed until the air conditioner 10 is turned off in operation S19, S20, and S21.

Referring to Fig. 5, a reference symbol ℓ 1 is understood as a pressure value that represents a target pressure, and a reference symbol ℓ 2 is understood as a pressure value that represents an operation pressure when each of the compressors 110 and 112 operates at a low load. Thus, a case in which the pressure value ℓ 2 is greater than the operation pressure ℓ 1 may represent a state in which the operation pressure of the cycle exceeds the target pressure in the operation S14 of Fig. 4.

Thus, although the operation pressure significantly exceeds the target pressure at a time t0, while the operations S16 to S18 of Fig. 4 are performed, the operation pressure may be converged on the target pressure at a time t1. As a result, when the air conditioner operates at the low load, the operation efficiency of the first and second compressors 110 and 112 according to the operation state may be improved.

According to the embodiments, when the low load operation of the compressor is performed, if the operation pressure does not reach the target pressure (high-pressure/low-pressure), the bypass valve and the injection valve may be controlled to control the operation factor of the compressor. Therefore, the unnecessary energy loss may be reduced to improve the reliability of the product.

Although embodiments have been described with reference to a number of illustrative embodiments thereof, it should be understood that numerous other modifications and embodiments can be devised by those skilled in the art that will fall within the scope of the appended claims.

## Claims

1. A method of controlling an air conditioner (10), the air conditioner (10) comprising a bypass passage (244) connected to a gas/liquid separator (250); a first branch part (247) from which an injection passage (246) and the bypass passage (244) are branched; a bypass valve (245) disposed in the bypass passage (244) to adjust a flow rate of the refrigerant; an injection valve (248) disposed in the injection passage (246) to adjust a flow rate of the refrigerant; a high-pressure sensor (125) detecting a refrigerant discharge pressure of a compressor (110, 112) of the air conditioner (10); and a low-pressure sensor (126) detecting a refrigerant suction pressure of the compressor (110, 112),
**characterized in that** the method comprises:
determining whether a low-load condition is satisfied on the basis of the number of indoor units of the air conditioner (10) or a temperature of external air;
performing a low-load operation of the compressor (110, 112) at a preset frequency when the low-load condition is satisfied;
detecting whether an operation pressure is out of a target pressure value or range while the low-load operation is performed; and
bypassing the refrigerant from the compressor (110, 112) to the gas/liquid separator (250) via the injection passage (246) when the operation pressure is out of the target pressure value or range,
wherein when the air conditioner (10) performs a heating operation, adjusting of the opening degree of the injection valve (248) is performed until the operation pressure detected by the high-pressure sensor (125) reaches the value or range with respect to the target high-pressure, or
when the air conditioner (10) performs a cooling operation, adjusting of the opening degree of the injection valve (248) is performed until the operation pressure detected by the low-pressure sensor (126) reaches the value or range with respect to the target low-pressure.

2. The method according to claim 1, wherein the air conditioner (10) further comprises first and second branch tubes (247a, 247b) branched from a second branch part (249) of the injection passage (246),
wherein the compressor (110, 112) comprises a first compressor (110) and a second compressor (112), and
wherein the first branch tube (247a) extends to the first compressor (110), and the second branch tube (247b) extends to the second compressor (112).

3. The method according to claim 1, wherein, when the pressure detected by the high-pressure sensor (125) or the low-pressure sensor (126) reaches the target pressure value or range, the bypass valve (245) is closed.

4. The method according to claim 3, wherein, when the operation pressure is out of the target pressure value or range, a fuzzy-control of the compressor (110, 112) is stopped, and
when the pressure detected by the high-pressure sensor (125) or the low-pressure sensor (126) reaches the target pressure value or range, a fuzzy-control of the compressor (110, 112) is performed.

## Patentansprüche

1. Verfahren zum Steuern einer Klimaanlage (10), wobei die Klimaanlage (10) aufweist:
einen Umgehungskanal (244), der mit einem Gas/Flüssigkeitsabscheider (250) verbunden ist; einen ersten Abzweigteil (247), von dem ein Einspritzkanal (246) und der Umgehungskanal (244) abgezweigt sind; ein Umgehungsventil (245), das im Umgehungskanal (244) angeordnet ist, um eine Durchflussgeschwindigkeit des Kältemittels einzustellen; ein Einspritzventil (248), das im Einspritzkanal (246) angeordnet ist, um eine Durchflussgeschwindigkeit des Kältemittels einzustellen; einen Hochdrucksensor (125), der einen Kältemittelausstoßdruck eines Verdichter (110, 112) der Klimaanlage (10) ermittelt;
und einen Niederdrucksensor (126), der einen Kältemittelansaugdruck des Verdichters (110, 112) ermittelt, **dadurch gekennzeichnet, dass** das Verfahren aufweist:
Feststellen, ob eine Niederlastbedingung erfüllt ist, auf der Grundlage der Anzahl von Inneneinheiten der Klimaanlage (10) oder einer Temperatur der Außenluft;
Durchführen eines Niederlastbetriebs des Verdichters (110, 112) mit einer voreingestellten Rate, wenn die Niederlastbedingung erfüllt ist;
Ermitteln, ob sich ein Betriebsdruck außerhalb eines Solldruckwerts oder -bereichs befindet, während der Niederlastbetrieb durchgeführt wird; und
Umleiten des Kältemittels vom Verdichter (110, 112) zum Gas/Flüssigkeitsabscheider (250) über den Einspritzkanal (246), wenn sich der Betriebsdruck außerhalb eines Solldruckwerts oder -Bereichs befindet,
wobei, wenn die Klimaanlage (10) einen Heizbetrieb durchführt, das Einstellen des Öffnungsgrads des Einspritzventils (248) durchgeführt wird, bis der durch den Hochdrucksensor (125) ermittelte Betriebsdruck einen Wert oder Bereich hinsichtlich des Sollhochdrucks erreicht, oder
wenn die Klimaanlage (10) eine Kühlbetrieb durchführt, das Einstellen des Öffnungsgrads des Einspritzventils (248) durchgeführt wird, bis der durch den Niederdrucksensor (126) ermittelte Betriebsdruck einen Wert oder Bereich des Sollniederdrucks erreicht.

2. Verfahren nach Anspruch 1, wobei die Klimaanlage (10) ferner eine erste und zweite Abzweigleitung (247a, 247b) aufweist, die vom einem zweiten Abzweigteil (249) des Einspritzkanals (246) abzweigen,
wobei der Verdichter (110, 112) einen ersten Verdichter (110) und einen zweiten Verdichter (112) aufweist, und
wobei sich die erste Abzweigleitung (247a) zum ersten Verdichter (110) erstreckt und sich zweite Abzweigleitung (247b) zum zweiten Verdichter (112) erstreckt.

3. Verfahren nach Anspruch 1, wobei, wenn der durch den Hochdrucksensor (125) oder den Niederdrucksensor (126) ermittelte Druck den Solldruckwert oder -bereich erreicht, das Umgehungsventil (245) geschlossen wird.

4. Verfahren nach Anspruch 3, wobei, wenn sich der Betriebsdruck außerhalb des Solldruckwerts oder -bereichs befindet, eine Fuzzy-Steuerung des Verdichters (110, 112) gestoppt wird, und
wenn der durch den Hochdrucksensor (125) oder den Niederdrucksensor (126) ermittelte Druck den Solldruckwert oder -bereich erreicht, eine Fuzzy-Steuerung des Verdichters (110, 112) durchgeführt wird.

## Revendications

1. Procédé de commande d'un climatiseur (10), ledit climatiseur (10) comprenant un passage de dérivation (244) relié à un séparateur de gaz/liquide (250) ; une première section de branchement (247) d'où partent un passage d'injection (246) et le passage de dérivation (244) ; une soupape de dérivation (245) disposée dans le passage de dérivation (244) pour régler le débit du réfrigérant ; une soupape d'injection (248) disposée dans le passage d'injection (246) pour régler le débit du réfrigérant ; un capteur haute pression (125) détectant une pression de refoulement de réfrigérant d'un compresseur (110, 112) du climatiseur (10) ;
et un capteur basse pression (126) détectant une pression d'aspiration de réfrigérant du compresseur (110, 112), **caractérisé en ce que** ledit procédé comprend :
la détermination si une condition de faible charge est satisfaire sur la base du nombre d'unités intérieures du climatiseur (10) ou d'une température de l'air extérieur ;
l'exécution d'un mode à faible charge du compresseur (110, 112) à une fréquence prédéfinie si la condition de faible charge est satisfaite ;
la détection si une pression de fonctionnement est extérieure à une valeur ou une plage de pression de consigne pendant l'exécution du mode à faible charge ; et
la dérivation du réfrigérant provenant du compresseur (110, 112) vers le séparateur de gaz/liquide (250) via le passage d'injection (246) si la pression de fonctionnement est extérieure à la valeur ou à la plage de pression de consigne,
où, lorsque le climatiseur (10) est en mode de chauffage, le réglage du degré d'ouverture de la soupape d'injection (248) est effectué jusqu'à ce que la pression de fonctionnement détectée par le capteur haute pression (125) atteigne la valeur ou la plage relative à la haute pression de consigne, ou,
lorsque le climatiseur (10) est en mode de refroidissement, le réglage du degré d'ouverture de la soupape d'injection (248) est effectué jusqu'à ce que la pression de fonctionnement détectée par le capteur basse pression (126) atteigne la valeur ou la plage relative à la basse pression de consigne.

2. Procédé selon la revendication 1, où le climatiseur (10) comprend en outre un premier et un deuxième tuyaux de branchement (247a, 247b) partant d'une deuxième section de branchement (249) du passage d'injection (246),
le compresseur (110, 112) comprenant un premier compresseur (110) et un deuxième compresseur (112), et
le premier tuyau de branchement (247a) s'étendant vers le premier compresseur (110), et le deuxième tuyau de branchement (247b) s'étendant vers le deuxième compresseur (112).

3. Procédé selon la revendication 1, où la soupape de dérivation (245) est fermée lorsque la pression détectée par le capteur haute pression (125) ou le capteur basse pression (126) atteint la valeur ou la plage de pression de consigne.

4. Procédé selon la revendication 3, où une commande floue du compresseur (110, 112) est arrêtée lorsque la pression de fonctionnement est extérieure à la valeur ou à la plage de pression de consigne, et où
une commande floue du compresseur (110, 112) est exécutée lorsque la pression détectée par le capteur haute pression (125) ou le capteur basse pression (126) atteint la valeur ou la plage de pression de consigne.
